# EUROPEAN PATENT SPECIFICATION

(11) **EP 1 815 747 B1**
(45) Date of publication and mention of the grant of the patent: **08.06.2011**
(21) Application number: 05809702.3
(22) Date of filing: 24.11.2005
(51) Int. Cl.: A23C 9/12

(54) **METHOD OF PRODUCING FERMENTED MILK PRODUCT**
VERFAHREN ZUR HERSTELLUNG EINES VERGORENEN MILCHPRODUKTS
MÉTHODE DE PRODUCTION D'UN PRODUIT À BASE DE LAIT FERMENTÉ

(30) Priority: 25.11.2004 JP 2004340941
(43) Date of publication of application: 08.08.2007
(60) Divisional application: 10189683.5
(73) Proprietor: Meiji Dairies Corporation, Tokyo 136-8908 (JP)
(72) Inventor: NOJI, Hisanobu, Meiji Dairies Corp, R & D Dept., Odawara-shi, Kanagawa, 250-0862 (JP); FUKUI, Munenori, Meiji Dairies Corp, R & D Dept., Odawara-shi, Kanagawa, 250-0862 (JP); KAMIYA, Tetsu, Meiji Dairies Corp, R & D Dept., Odawara-shi, Kanagawa, 250-0862 (JP); SASAKI, Hideshi, Meiji Dairies Corp, R & D Dept., Odawara-shi, Kanagawa, 250-0862 (JP); ECHIZEN, Hiroshi, Meiji Dairies Corp, R & D Dept., Odawara-shi, Kanagawa, 250-0862 (JP)
(74) Representative: Novagraaf Technologies
(86) International application number: PCT/JP2005/021516
(87) International publication number: WO 2006/057266

(56) References cited:
- EP-A- 1 142 481
- WO-A-03/070011
- JP-A- 2002 186 810
- JP-A- 2004 097 051
- EDITED BY YAMAUCHI KUNIO, YOKOYAMA KENKICHI.: 'Kabushiki Kaisha Asakura Shoten Hakko, Miruku Sogo Jiten, 3rd print', 01 May 1998 pages 244 - 245, XP002996713

## Description

### Technical Field

The present invention relates to a process for producing fermented milk such as yogurt.

### Background Art

Fermented milk such as stirred yogurt is produced usually through a process including a step of fermenting a milk base (yogurt mix) containing at least one member selected from milk, dairy product and milk protein, a step of breaking the resulting fermented milk curds, and a step of cooling them.

Incidentally, generally, raw milk such as cow's milk, dairy products such as powdered skim milk, and milk protein such as milk protein concentrate (MPC), whey protein concentrate (WPC), and whey protein isolate (WPI) are used for production of milk base (yogurt mix).

Fermented milk thus produced requires suitable viscosity (rich texture upon eating, thick texture, etc.) and smoothness (absence of gritty texture and powdery texture upon eating, roughness in outward appearance, etc.).

Accordingly, various processes for producing fermented milk have been proposed for the purpose of production of fermented milk having suitable viscosity and a fine and creamy texture.

For example, Japanese Patent Application Laid-Open (JP-A) No. 7-104 has proposed a method in which gluey fermented milk having suitable viscosity and a creamy texture can be produced by using high-purity whey protein (WPC 85 etc.) as a starting material to form strong curds and then pulverizing the curds with a homogenizer.

A method of using a homogenizer in breaking fermented milk curds to pulverize the curd particles is applied to production of drinking yogurt. When fermented milk curds are broken with a homogenizer, curd particles are sufficiently pulverized thus eliminating gritty texture upon eating and roughness in outward appearance, to smooth the texture of yogurt. However, the fermented milk curds are subjected to excessive shear force, thus extremely reducing the viscosity.

When fermented milk (stirred yogurt etc.) requiring e.g. shape retention and suitable viscosity and thick texture (rich texture upon eating) is produced by this method, the product is poor in viscosity and thick texture necessary for shape retention. That is, use of a homogenizer in a step of breaking fermented milk curds is not suitable in a process of producing stirred yogurt. Use of high-purity whey protein is essential for the process proposed in JP-A No. 7-104 supra.

In a process for producing fermented milk including a step of fermenting a milk base (yogurt mix) containing at least one member selected from milk, dairy product and milk protein, a step of breaking the resulting fermented milk curds, and a step of cooling them, the step of breaking fermented milk curds is carried out for breaking the structure of yogurt and usually effected by stirring or filtration.

WO 03/070011 A relates to a method for producing fermented milk products, wherein at least one casein of the milk is hydrolyzed by means of a coagulating enzyme of the milk, and the product is stirred after fermenting.

JP 2004097051 A discloses the preparation of a soft type yogurt by providing coolant to the jacket of the fermentation tank which performs gelatinization of the yogurt mix, stopping the fermentation process and stirring the fermentation mix.

In such stirring and filtration, however, curd particles are not sufficiently pulverized, and you may thus feel gritty texture upon eating. In addition, the surface of the resulting product (for example, stirred yogurt) seems rough in outward appearance, which may not be said to have best qualities. When curd particles are enriched particularly with solids-non-fat (SNF) or protein, the curd particles are more hardly pulverized.

The smoothness of fermented milk (absence of gritty texture and powdery texture upon eating, roughness in outward appearance, etc.) is significantly influenced by the average diameter of particles in fermented milk and the distribution of diameters of particles in fermented milk.

Fermented milk (for example, stirred yogurt) further requires suitable viscosity (rich texture upon eating, thick texture, etc.).

However, there is not proposed a process for producing fermented milk having viscosity that is not particularly low and simultaneously having smooth texture by exhibiting a preferable distributed state of particle diameters not extending in a broad range.

Accordingly, there is demand for production of fermented milk having soft (smooth) texture by exhibiting a preferable distributed state of particle diameters concentrated in a specific range around a desired value so as not to allow the distribution of particle diameters to extend in a broad range without particular decrease in viscosity.

The object of the present invention is to provide a process for producing fermented milk having a preferable distributed state of particle diameters concentrated in a specific range around a desired value so as not to allow the distribution of particle diameters to extend in a broad range without particular decrease in viscosity, as well as fermented milk produced by the process.

Particularly, the object of the present invention is to provide a process for producing fermented milk having a preferable distributed state of particle diameters concentrated in a specific range around a desired value so as not to allow the distribution of particle diameters to extend in a broad range without particular decrease in viscosity even if a general starting material used conventionally in production of fermented milk such as stirred yogurt is used regardless of the solids content, protein concentration and fat concentration of a milk base (yogurt mix) containing at least one member selected from milk, dairy product and milk protein, and regardless of whether sugar is added or not and whether a stabilizer is added or not, as well as fermented milk produced by the process.

### Summary of Invention

To solve the object described above, the object of the present invention is to provide a process for producing fermented milk, comprising a step of breaking fermented milk curds obtained by fermenting a milk base (yogurt mix) containing at least one member selected from milk (for example, raw milk such as cow's milk), dairy product (for example, powdered skim milk etc.), and milk protein (for example, milk protein concentrate, whey protein concentrate and whey protein isolate), wherein the step of breaking fermented milk curds involves extruding the fermented milk curds through a plurality of openings having a size of 44 to 10 µm (325 to 1300 meshes (JIS screen standards)).

A plurality of the openings having a size of 44 to 10 µm (325 to 1300 meshes (JIS screen standards)) can be formed into a plurality of slits having a slit width of 10 to 40 µm formed in a filter member.

According to the process of the present invention, the size of the particle diameter of the produced fermented milk can be regulated by changing the width of a slit formed in a filter membrane and/or the flow rate of the fermented milk curds passing through the filter member.

According to the present invention, there can be provided a process for producing fermented milk having a preferable distributed state of particle diameters concentrated in a specific range around a desired value so as not to allow the distribution of particle diameters to extend in a broad range without particular decrease in viscosity, as well as fermented milk produced by the process.

According to the present invention, there can be particularly provided a process for producing fermented milk having a preferable distributed state of particle diameters concentrated in a specific range around a desired value so as not to allow the distribution of particle diameters to extend in a broad range without particular decrease in viscosity even if a general starting material used conventionally in production of fermented milk such as stirred yogurt is used regardless of the solids content, protein concentration and fat concentration of a milk base (yogurt mix) containing at least one member selected from milk, dairy product and milk protein, and regardless of whether sugar is added or not and whether a stabilizer is added or not, as well as fermented milk produced by the process.

Production of fermented milk is feasible while the size of the particle diameter of produced fermented milk is regulated such that the diameters of particles in the produced fermented milk can be concentrated around a desired particle diameter.

In the present invention, the stabilizer is used generally for the purpose of improving the qualities of a food, and encompasses not only any substances mentioned by application names such as "stabilizer, thickener, gelling agent, glue" in the Food Sanitation Law, but also substances which can be regarded as general foods such as agar and gelatin and can exhibit roles and functions such as stabilization, thickening, gelation and gelatinization.

### Brief Description of Drawings

Fig. 1 is a graph showing the particle size distribution of the fermented milk of the present invention produced by the process of the present invention.
Fig. 2 is a graph showing the particle size distribution of other fermented milk of the present invention produced by the process of the present invention.
Fig. 3 is a graph showing the particle size distribution of other fermented milk of the present invention produced by the process of the present invention.
Fig. 4 is a graph showing the particle size distribution of other fermented milk of the present invention produced by the process of the present invention.
Fig. 5 is a graph showing the particle size distribution of other fermented milk of the present invention produced by the process of the present invention.
Fig. 6 is a graph showing the particle size distribution of other fermented milk of the present invention produced by the process of the present invention.
Fig. 7 is a graph showing the particle size distribution of conventional fermented milk produced by a conventional process.
Fig. 8 is a graph showing the particle size distribution of fermented milk different from that of the present invention, which was produced by a process different from the process of the present invention.
Fig. 9 is a graph showing the particle size distribution of other fermented milk different from that of the present invention, which was produced by a process different from the process of the present invention.
Fig. 10 is a graph showing the particle size distribution of other fermented milk of the present invention produced by the process of the present invention.

### Best Mode for Carrying Out the Invention

The process for producing fermented milk as proposed by the present invention is a process for producing fermented milk comprising a step of breaking fermented milk curds obtained by fermenting a milk base (yogurt mix) containing at least one member selected from milk, dairy product and milk protein, wherein the step of breaking fermented milk curds involves extruding the fermented milk curds through a plurality of openings having a size of 325 to 1300 meshes (JIS screen standards).

A plurality of the openings having a size of 44 to 10 µm (325 to 1300 meshes (JIS screen standards)) can be formed into a plurality of slits having a slit width of 10 to 40 µm formed in a filter member.

In the present inventors' experiment, it was revealed that when the step of breaking fermented milk curds is carried out by extruding the fermented milk curds through openings having a nozzle diameter of 44 to 10 µm (325 to 1300 meshes (JIS screen standards)), the diameters of particles are concentrated in a specific region around a desired value without particular decrease in viscosity, whereby fermented milk having a preferable distributed state of particle diameters so as not to extend in a broad range could be obtained.

Fermented milk having a preferable distributed state of particle diameters concentrated in a specific range around a desired value so as not to allow the distribution of particle diameters to extend in a broad range without particular decrease in viscosity could be produced even if a general starting material used conventionally in production of fermented milk such as stirred yogurt is used regardless of the solids content, protein concentration and fat concentration of the milk base (yogurt mix) and whether sugar is added or not and whether a stabilizer is added or not.

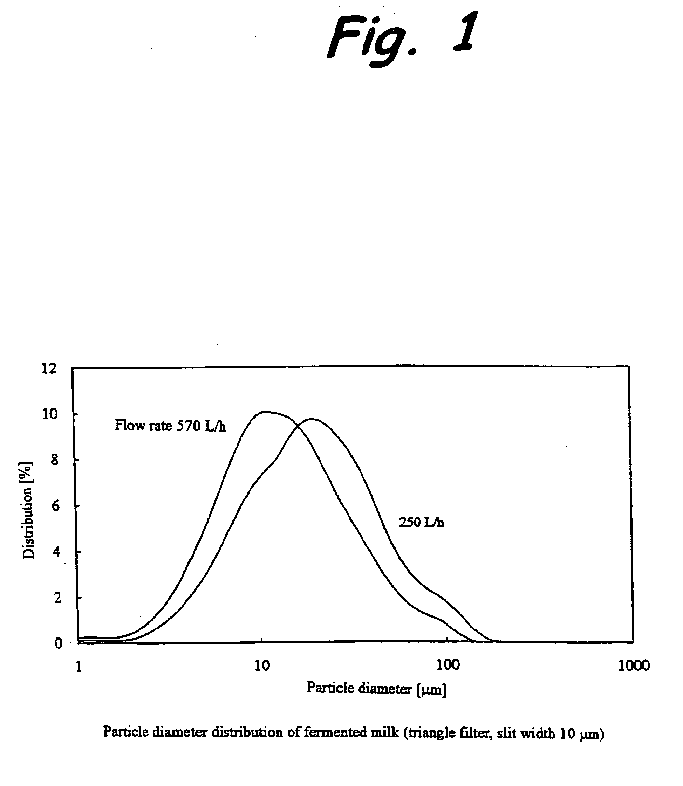

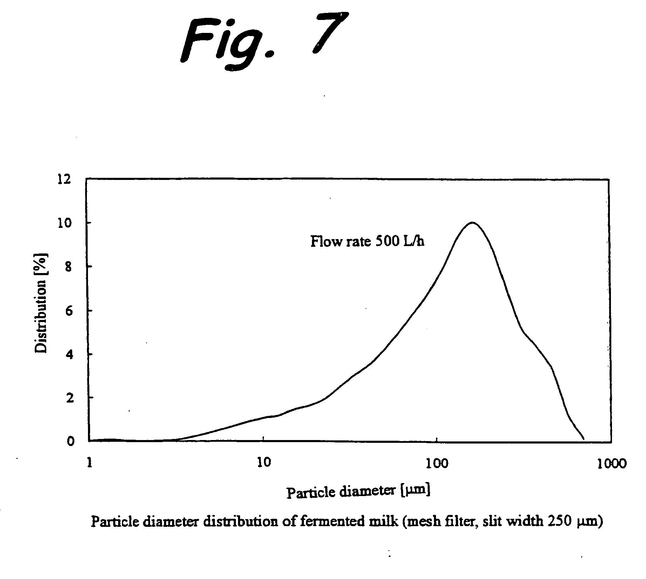

Figs. 1 to 7 show the distribution of the diameters of particles in fermented milks produced from the same starting material, wherein in a process for producing fermented milk comprising a step of fermenting a milk base (yogurt mix) containing at least one member selected from milk, dairy product and milk protein, a step of breaking the resulting fermented milk curds, and a step of cooling the product, the step of breaking fermented milk curds is the step used in the present invention (Figs. 1 to 6) or a conventionally used step of breaking fermented milk curds (Figs. 7 to 9).

In Figs. 1 to 4, triangle filters (trade name, manufactured by Arai Machinery Corporation) having a plurality of slits having a slit width of 10 µm (mesh number 1300 (JIS screen standards)), a slit width of 15 µm (mesh number 900 (JIS screen standards)), a slit width of 20 µm (mesh number 650 (JIS screen standards)) and a slit width of 30 µm (mesh number 450 (JIS screen standards)) formed in filter members were used as one example of a plurality of openings having a size of 44 to 10 µm (325 to 1300 meshes) in the step of breaking the fermented milk curds through a plurality of openings having a size of 44 to 10 µm (325 to 1300 meshes (JIS screen standards))

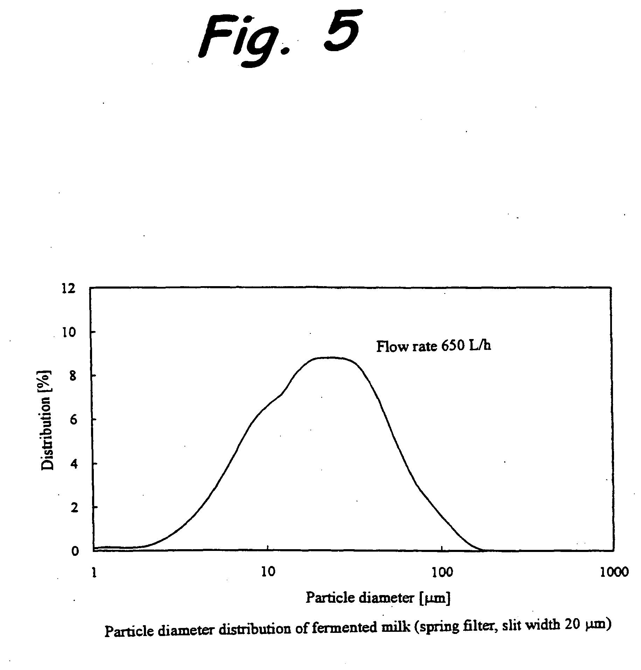

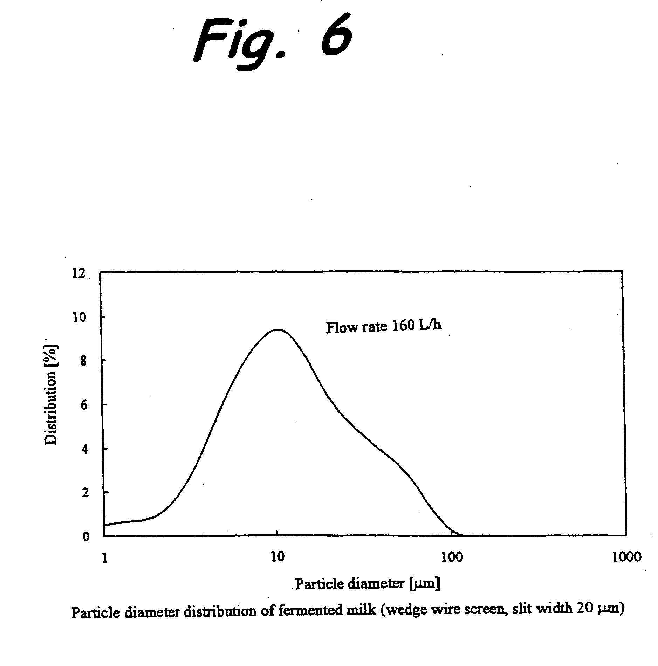

In Figs. 5 and 6, a spring filter (trade name, manufactured by Nikuni Machinery Industrial Co., Ltd.) and a wedge wire screen (trade name, manufactured by Manabe Kogyo Co., Ltd.), having a plurality of slits having a slit width of 20 µm (mesh number 650 (JIS screen standards)), were used as one example of a plurality of openings having a size of 44 to 10 µm (325 to 1300 meshes), in the step of breaking the fermented milk curds through a plurality of openings having a size of 44 to 10 µm (325 to 1300 meshes (JIS screen standards)).

In any cases, the diameters of particles were distributed around a specific particle diameter (which is also a relatively small particle diameter), and were not dispersed in a broad range.

In any cases, the viscosity of fermented milk had viscosity around 8000 mPa·s or more, which was suitable for fermented milk such as stirred yogurt.

In a sensory quality evaluation test conducted by the present inventors, the viscosity for attaining suitable viscosity and thick texture necessary for fermented milk such as stirred yogurt was recognized to be preferably 8000 mPa·s or more, and the fermented milk produced by the process of the present invention was not significantly lower than this preferable viscosity range.

The diameters of particles in the fermented milk (stirred yogurt) produced in the processes shown in Figs. 1 to 6 were regulated in a specific range, so the smoothness (absence of gritty texture upon eating, powdery texture and roughness in outer appearance) of the fermented milk was remarkable, while the fermented milk had the suitable viscosity described above.

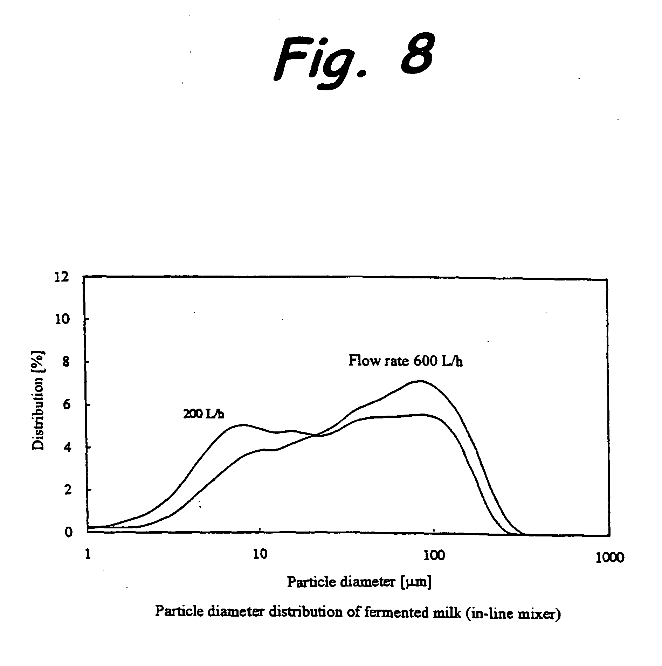

On the other hand, when a mesh filter used conventionally in the step of breaking fermented milk curds is used or when an in-line mixer is used, the distribution of particle diameters is in a broad range as shown in Figs. 7 and 8, thus indicating that a large amount of particles having large particle diameters are contained in the fermented milk. The fermented milk (stirred yogurt) produced in the processes in Figs. 7 and 8 was inferior in smoothness to the fermented milk of the present invention produced by the process of the present invention wherein the diameters of particles were regulated in specific size in a relatively small range as shown in Figs. 1 to 6.

When a homogenizer was used in the step of breaking the fermented milk curds, the diameters of particles were distributed around a specific particle diameter and not dispersed in a broad range, but the viscosity did not exceed 6000 mPa·s, and production of fermented milk having suitable viscosity (rich texture upon eating, thick texture, etc.) necessary for fermented milk was difficult.

As shown in Figs. 1 to 4, the particle diameter of the produced fermented milk can be regulated by changing the width of a slit formed in a filter member, by changing the flow rate of the fermented milk curds passing through the filter member or by changing both the width of a slit formed in a filter member and the flow rate of the fermented milk curds passing through the filter member in the process of the present invention.

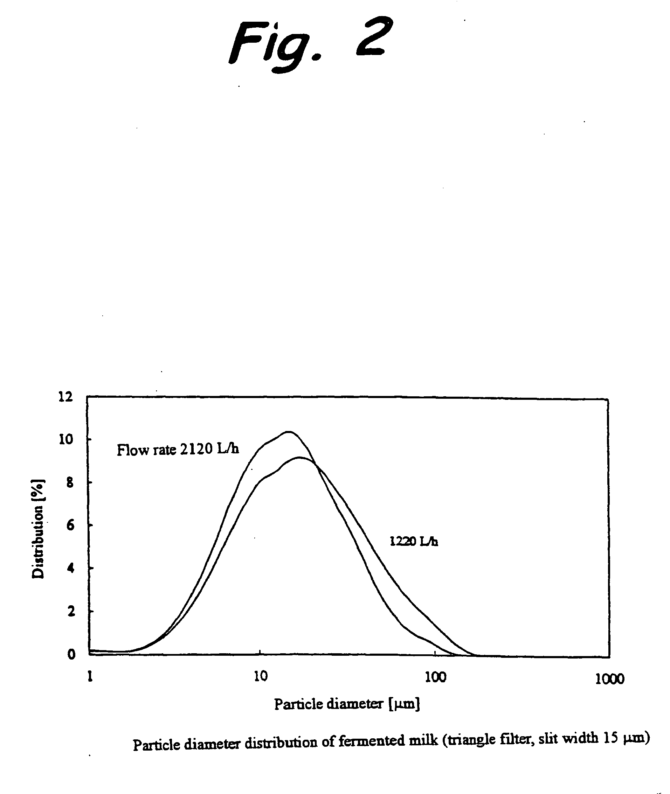

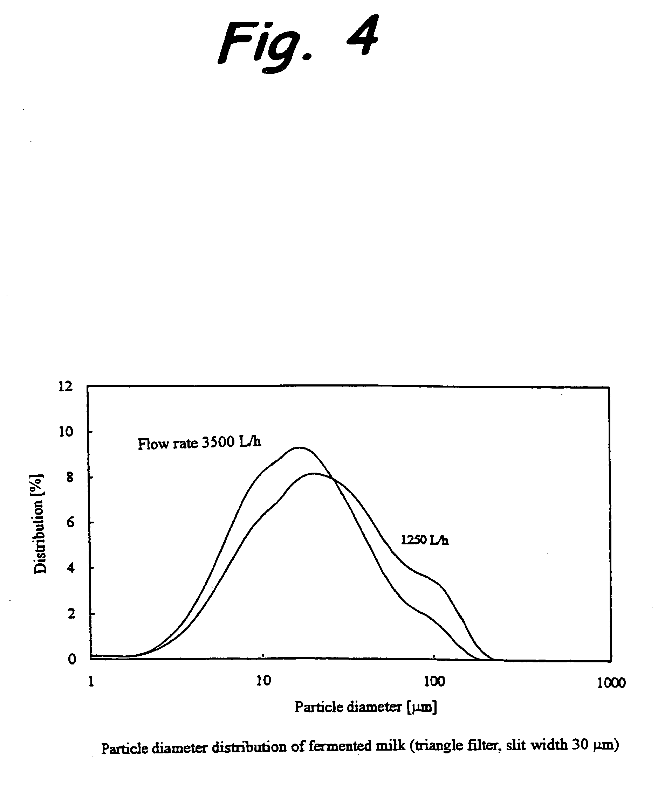

For example, as shown in Fig. 1, when a triangle filter (trade name, manufactured by Arai Machinery Corporation) having a plurality of slits having a slit width of 10 µm (mesh number 1300 (JIS screen standards)), a slit width of 15 µm (mesh number 900 (JIS screen standards)), a slit width of 20 µm (mesh number 650 (JIS screen standards)) or a slit width of 30 µm (mesh number 450 (JIS screen standards)) formed in a filter member was used as one example of a plurality of openings having a size of 44 to 10µm (325 to 1300 meshes), in the step of breaking the fermented milk curds through a plurality of openings having a size of 44 to 10µm (325 to 1300 meshes (JIS screen standards)), the size in which the diameters of the produced fermented milk particles are concentrated can be regulated by changing the flow rate of the fermented milk curds passing through the filter member having the determined slit width, and as is evident from comparison between the flow rate of 1220 L/h with a slit width of 15 µm in Fig. 2 and the flow rate of 1250 L/h with a slit width of 30 µm in Fig. 4, the size in which the diameters of the produced fermented milk particles are concentrated can be regulated by changing the slit width.

In the present invention described above, the size (44 to 10 µm (325 to 1300 meshes [JIS screen standards])) of a plurality of openings in the step of breaking the fermented milk curds, and the slit width of 10 to 40 µm formed in the filter member as a specific example, were defined from the viewpoint in which on the basis of the inventors' experiment, fermented milk having a preferable distributed state of particle diameters concentrated in a specific range around a desired value so as not to allow the distribution of particle diameters to extend in a broad range without particular decrease in viscosity (that is, without permitting the viscosity in a predetermined composition to be significantly lower than 8000 mPa·s) can be produced even if a general starting material used conventionally in production of fermented milk such as stirred yogurt is used regardless of the solids content, protein concentration and fat concentration of a milk base (yogurt mix) containing at least one member selected from milk, dairy product and milk protein, and regardless of whether sugar is added or not and whether a stabilizer is added or not, and the size of fermented milk particles produced can be regulated by changing the width of a slit formed in a filter member and/or the flow rate of the fermented milk curds passing through the filter member.

Hereinafter, the present invention is described in more detail by reference to the Examples.

### Example 1

### (Step of fermenting a dairy product and a milk protein-containing milk base (yogurt mix))

1725 g powdered skim milk, 525 g milk protein concentrate (referred to hereinafter as "MPC") and 750 g sugar were dissolved under stirring in 10740 g water at ordinary temperatures. Thereafter, the mixture was heated to 50°C under stirring, and after heating, 810 g salt-free butter was introduced into it. After dissolution, the mixture was heated to 70°C and then subjected to a homogenizer. After homogenization, the mixture was heated to 95°C and then cooled to 43°C.

Then, 3 wt% mixed starter of Lactobacillus bulgaricus and Streptococcus thermophilus isolated from Meiji Bulgaria Fruits Yogurt manufactured by Meiji Dairies Corporation was inoculated onto the mixture and stirred for 5 minutes.

This milk base (yogurt mix) was fermented in the vicinity of 43°C, and when the pH was reduced to 4.7 or less, the fermentation was finished.

The solids content of the milk base (yogurt mix) was 24.2%, the protein concentration was 7.1%, the fat concentration was 4.7%, and the sugar concentration was 5.0%.

### (Step of breaking the fermented milk curds)

The step of breaking the fermented milk curds thus obtained was carried out as follows.

The fermented milk curds were fluidized and broken with a triangle filter (trade name, manufactured by Arai Machinery Corporation) having a plurality of minute openings in slits having a slit width of 10 µm formed in a filter member.

The size of an opening (slight having a slit width of 10 µm) of the triangle filter (trade name) having a plurality of minute openings in slits having a slit width of 10 µm corresponds to 1300 meshes (JIS screen standards). That is, the step of breaking the fermented milk curds was carried out by using a filter member having a plurality of openings having a size of 10 µm (1300 meshes (JIS screen standards)) formed therein.

The throughput speed (speed of fluidizing the fermented milk curds) consisted of two standards, that is, flow rates of 250 L/h and 570 L/h fermented milk curds through an effective area of 210 cm² of the triangle filter (trade name).

The temperature of the fluidized fermented milk curds was changed with time to become 43 to 35°C.

### (Cooling step)

The fermented milk curds thus broken were rapidly cooled to about 5°C with a heat exchanger such as a tubular cooler. Thereafter, the sample was placed in a predetermined frame and cooled in a refrigerator (3 to 5°C, 12 hours), to give stirred yogurt as the fermented milk of the present invention.

As described above, this fermented milk (stirred yogurt) was produced without adding a stabilizer, and sugar was added to the starting materials.

The relationship between the distributed state of the diameters of fermented milk particles produced and the flow rate of the fermented milk curds fed is shown in Fig. 1. As shown in Fig. 1, when the flow rate of the curds fed was 250 L/h, the particle diameters were distributed around a size of about 18 µm. When the flow rate of the curds fed was 570 L/h, the particle diameters were distributed around a size of about 10 µm.

When the flow rate of the curds fed was 250 L/h, the average particle diameter was 16.9 µm, and when the flow rate was 570 L/h, the average particle diameter was 11.7 µm.

When the flow rate was 250 L/h, the viscosity was 9100 mPa·s, and when the flow rate was 570 L/h, the viscosity was 9500 mPa·s.

Fermented milk having suitable viscosity with particles being distributed densely around a specific size without distribution in a broad range could be obtained stably by the process described above.

When the triangle filter (trade name, manufactured by Arai Machinery Corporation) having a plurality of minute openings in slits having a slit width of 10 µm formed in a filter member, used in this example, was compared with a triangle filter (trade name, manufactured by Arai Machinery Corporation) having a plurality of minute openings in slits having slit widths of 15 µm, 20 µm and 30 µm formed in a filter member used later in the Examples, the throughput speed in this example was lightly lower.

A laser scattering particle-size distribution measuring instrument SALD-2100 (Shimadzu Corporation) was used in measurement of particle diameters in the present invention, the Examples and the Comparative Examples. The average particle diameter was a volume-average particle diameter which was determined by suspending a sample in a citrate buffer, and 30 seconds later, measuring it with a standard refractive index of 1.70 to 0.20 i.

In evaluation of viscosity in the present invention, the Examples and the Comparative Examples, a sample was measured for viscosity after stirring for 30 seconds at 30 rpm with No. 4 rotor (code M23) in a rotating Brookfield viscometer TV·10M manufactured by Toki Sangyo Co., Ltd.

The sample used in measurement was prepared in each of the Examples and the Comparative Examples and then introduced into a beaker having a diameter of about 50 mm. The sample was measured just after stirring by rotating it 10 times in clockwise and anticlockwise directions respectively with a spatula or the like. The measurement temperature was 5°C. By this method, reproducible results are obtained in measurement of a highly viscous fluid such as fermented milk.

The viscosity in the present invention, the Examples and the Comparative Examples is a value determined by this method. The maximum measurement limit of the rotating Brookfield viscometer used is 20000 mPa·s.

In the step of breaking fermented milk curds by extruding the fermented milk curds through a plurality of openings having a size of 44 to 10µm (325 to 1300 meshes (JIS screen standards)) in this example, the triangle filter (trade name, manufactured by Arai Machinery Corporation) having a plurality of minute openings in slits having a slit width of 10 µm (mesh number 1300 (JIS screen standards)) formed in a filter member was used as one example of a plurality of openings having a size of 44 to 10 µm (325 to 1300 meshes).

The triangle filter manufactured by Arai Machinery Corporation used also in the following examples is a separator having a filter member provided a plurality of slits having a minute slit width, for example, a slit width of 3 to 300 µm or more, and this slit width corresponds to the pore diameter of a usual filter.

### Example 2

Fermented milk curds (that is, a milk base (yogurt mix) with a solids content, 24.2%; protein concentration, 7.1%; fat, 4.7%; sugar 5.0%; a stabilizer, not added) obtained in the same manner as in Example 1 were broken by fluidizing and extruding the fermented milk curds through a triangle filter (trade name, manufactured by Arai Machinery Corporation) having a plurality of minute openings in slits having a slit width of 15 µm formed in a filter member, and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

In Example 2, the size of an opening (slight having a slit width of 15 µm) of the triangle filter (trade name) having a plurality of minute openings in slits having a slit width of 15 µm corresponds to 900 meshes (JIS screen standards). That is, the step of breaking the fermented milk curds obtained in the same manner as in Example 1 was carried out by using a filter member having a plurality of openings having a size of 900 meshes (JIS screen standards) formed therein.

The throughput speed (speed of fluidizing the fermented milk curds) consisted of two standards, that is, flow rates of 1220 L/h and 2120 L/h fermented milk curds through an effective area of 210 cm² of the triangle filter (trade name).

The temperature of the fluidized fermented milk curds was changed with time to become 43 to 35°C.

The relationship between the distributed state of the diameters of fermented milk particles produced and the flow rate of the fermented milk curds fed is shown in Fig. 2. As shown in Fig. 2, when the flow rate of the curds fed was 1220 L/h, the particle diameters were distributed around a size of about 18 µm. When the flow rate of the curds fed was 2120 L/h, the particle diameters were distributed around a size of about 15 µm.

When the flow rate of the curds fed was 1220 L/h, the average particle diameter was 15.2 µm, and when the flow rate was 2100 L/h, the average particle diameter was 12.6 µm.

When the flow rate was 1220 L/h, the viscosity was 11100 mPa·s, and when the flow rate was 2100 L/h, the viscosity was 11000 mPa·s.

Fermented milk having suitable viscosity with particles being distributed densely around a specific size without distribution in a broad range could be obtained stably by the process described above.

The fermented milk (stirred yogurt) in Example 2 using the triangle filter (trade name, manufactured by Arai Machinery Corporation) having a plurality of minute openings in slits having a slit width of 15 µm formed in a filter member, as compared with the fermented milk (stirred yogurt) in Example 1 using the triangle filter (trade name, manufactured by Arai Machinery Corporation) having a plurality of minute openings in slits having a slit width of 10 µm formed in a filter member, showed higher viscosity and a higher throughput speed. Regardless of slit width, the two products were similar in respect of the distributed state of the particle diameter of the fermented milk, smooth texture upon eating, etc. Accordingly, it can be said that from the viewpoint of increasing the viscosity of the fermented milk, the thick texture and the throughput speed, the triangle filter (trade name, manufactured by Arai Machinery Corporation) having a plurality of minute openings in slits having a slit width of 15 µm formed in a filter member is superior to the triangle filter (trade name, manufactured by Arai Machinery Corporation) having a plurality of minute openings in slits having a slit width of 10 µm formed in a filter member.

### Example 3

Fermented milk curds (that is, a milk base (yogurt mix) with a solids content, 24.2%; protein concentration, 7.1%; fat, 4.7%; sugar 5.0%; a stabilizer, not added) obtained in the same manner as in Example 1 were broken by fluidizing and extruding the fermented milk curds through a triangle filter (trade name, manufactured by Arai Machinery Corporation) having a plurality of minute openings in slits having a slit width of 20 µm formed in a filter member, and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

In Example 3, the size of an opening (slight having a slit width of 20 µm) of the triangle filter (trade name) having a plurality of minute openings in slits having a slit width of 20 µm corresponds to 650 meshes (JIS screen standards). That is, the step of breaking the fermented milk curds obtained in the same manner as in Example 1 was carried out by using a filter member having a plurality of openings having a size of 650 meshes (JIS screen standards) formed therein.

The throughput speed (speed of fluidizing the fermented milk curds) consisted of two standards, that is, flow rates of 1300 L/h and 2900 L/h fermented milk curds through an effective area of 210 cm² of the triangle filter (trade name).

The temperature of the fluidized fermented milk curds was changed with time to become 43 to 35°C.

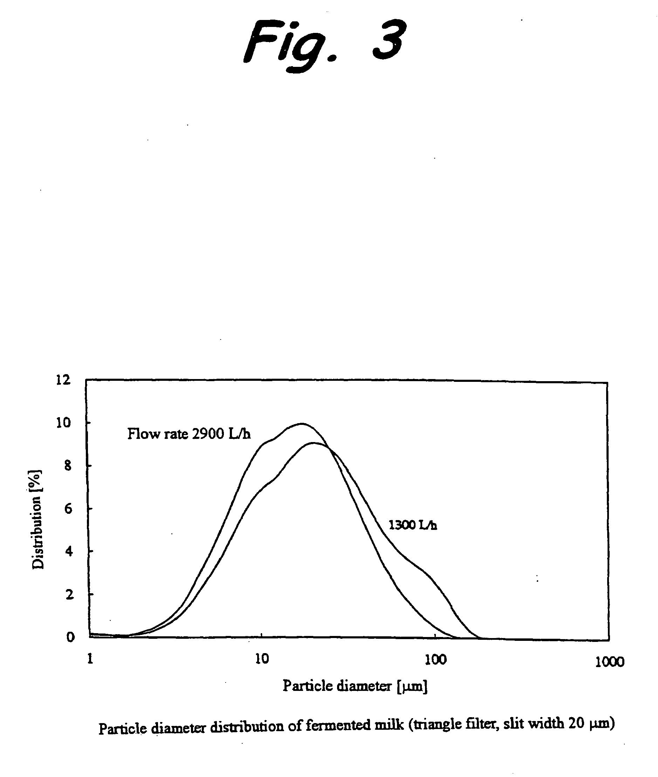

The relationship between the distributed state of the diameters of fermented milk particles produced and the flow rate of the fermented milk curds fed is shown in Fig. 3. As shown in Fig. 3, when the flow rate of the curds fed was 1300 L/h, the particle diameters were distributed around a size of about 18 µm. When the flow rate of the curds fed was 2900 L/h, the particle diameters were distributed around a size of about 18 µm.

When the flow rate of the curds fed was 1300 L/h, the average particle diameter was 18.2 µm, and when the flow rate was 2900 L/h, the average particle diameter was 14.2 µm.

When the flow rate was 1300 L/h, the viscosity was 12900 mPa·s, and when the flow rate was 2900 L/h, the viscosity was 12500 mPa·s.

Fermented milk having suitable viscosity with particles being distributed densely around a specific size without distribution in a broad range could be obtained stably by the process described above.

The fermented milk (stirred yogurt) in Example 3 using the triangle filter (trade name, manufactured by Arai Machinery Corporation) having a plurality of minute openings in slits having a slit width of 20 µm formed in a filter member, as compared with the fermented milk (stirred yogurt) in Example 2 using the triangle filter (trade name, manufactured by Arai Machinery Corporation) having a plurality of minute openings in slits having a slit width of 15 µm formed in a filter member, showed higher viscosity and a higher throughput speed. Regardless of slit width, the two products were similar in respect of the distributed state of the particle diameter of the fermented milk, smooth texture upon eating, etc. Accordingly, it can be said that from the viewpoint of increasing the viscosity of the fermented milk, the thick texture and the throughput speed, the triangle filter (trade name, manufactured by Arai Machinery Corporation) having a plurality of minute openings in slits having a slit width of 10 µm or 15 µm formed in a filter member is superior to the triangle filter (trade name, manufactured by Arai Machinery Corporation) having a plurality of minute openings in slits having a slit width of 20 µm formed in a filter member.

### Example 4

Fermented milk curds (that is, a milk base (yogurt mix) with a solids content, 24.2%; protein concentration, 7.1%; fat, 4.7%; sugar 5.0%; a stabilizer, not added) obtained in the same manner as in Example 1 were broken by fluidizing and extruding the fermented milk curds through a triangle filter (trade name, manufactured by Arai Machinery Corporation) having a plurality of minute openings in slits having a slit width of 30 µm formed in a filter member, and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

In Example 4, the size of an opening (slit having a slit width of 30 µm) of the triangle filter (trade name) having a plurality of minute openings in slits having a slit width of 30 µm corresponds to 450 meshes (JIS screen standards). That is, the step of breaking the fermented milk curds obtained in the same manner as in Example 1 was carried out by using a filter member having a plurality of openings having a size of 30 µm (450 meshes (JIS screen standards)) formed therein.

The throughput speed (speed of fluidizing the fermented milk curds) consisted of two standards, that is, flow rates of 1300 L/h and 3500 L/h fermented milk curds through an effective area of 210 cm² of the triangle filter (trade name).

The temperature of the fluidized fermented milk curds was changed with time to become 43 to 35°C.

The relationship between the distributed state of the diameters of fermented milk particles produced and the flow rate of the fermented milk curds fed is shown in Fig. 4. As shown in Fig. 4, when the flow rate of the curds fed was 1250 L/h, the particle diameters were distributed around a size of about 18 µm. When the flow rate of the curds fed was 3500 L/h, the particle diameters were distributed around a size of about 15 µm.

When the flow rate of the curds fed was 1250 L/h, the average particle diameter was 19.8 µm, and when the flow rate was 3500 L/h, the average particle diameter was 15.0 µm.

When the flow rate was 1250 L/h, the viscosity was 13200 mPa·s, and when the flow rate was 3500 L/h, the viscosity was 12900 mPa·s.

Fermented milk having suitable viscosity with particles being distributed densely around a specific size without distribution in a broad range could be obtained stably by the process described above.

The fermented milk (stirred yogurt) in Example 4 using the triangle filter (trade name, manufactured by Arai Machinery Corporation) having a plurality of minute openings in slits having a slit width of 30 µm formed in a filter member, as compared with the fermented milks (stirred yogurts) in Examples 1, 2 and 3 using the triangle filters (trade name, manufactured by Arai Machinery Corporation) having a plurality of slits having slit widths of 10, 15 and 20 µm formed in filter members, showed higher viscosity and a higher throughput speed. Regardless of slit width, these products were similar in respect of the distributed state of the particle diameter of the fermented milk, smooth texture upon eating, etc. Accordingly, it can be said that from the viewpoint of increasing the viscosity of the fermented milk, the thick texture and the throughput speed, the triangle filter (trade name, manufactured by Arai Machinery Corporation) having a plurality of minute openings in slits having a larger slit width formed in a filter member is suitable.

In the step of breaking the fermented milk curds obtained from a milk base (yogurt mix) having a solids content of 24.2% and a protein concentration of 7.1% without adding a stabilizer through a plurality of openings having a size of 44 to 10 µm (325 to 1300 meshes (JIS screen standards) in Examples 1 to 4, four kinds of triangle filters (trade name, manufactured by Arai Machinery Corporation) having a plurality of minute openings having slit widths of 10, 15, 20, and 30 µm formed in filter members were used as one example of a plurality of openings having a size of 44 to 10 µm (325 to 1300 meshes (JIS screen standards)).

Fermented milk having suitable viscosity with particles being distributed densely around a specific size without distribution in a broad range could thereby be stably obtained.

### Example 5

Using a spring filter (trade name) manufactured by Nikuni Machinery Industrial Co., Ltd., fermented milk curds (that is, a milk base (yogurt mix) with a solids content, 24.2%; protein concentration, 7.1%; fat, 4.7%; sugar 5.0%; a stabilizer, not added) obtained in the same manner as in Example 1 were broken by fluidizing and extruding the fermented milk curds through openings of the filter and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

A plurality of minute openings in slits having a slit width of 20 µm formed in a filter member are formed in the spring filter (trade name, manufactured by Nikuni Machinery Industrial Co., Ltd.) used in Example 5. This slit width corresponds to 650 meshes (JIS screen standards). That is, the step of breaking the fermented milk curds was carried out by using a filter member having a plurality of openings having a size of 20 µm (650 meshes (JIS screen standards)) formed therein.

The throughput speed (speed of fluidizing the fermented milk curds) was a flow rate of 650 L/h fermented milk curds.

The temperature of the fluidized fermented milk curds was changed with time to become 43 to 35°C.

The relationship between the distributed state of the diameters of fermented milk particles produced and the flow rate of the fermented milk curds fed is shown in Fig. 5. As shown in Fig. 5, the particle diameters were distributed around a size of about 22 µm.

The average particle diameter was 17.3 µm, and the viscosity was 9200 mPa·s.

Fermented milk having suitable viscosity with particles being distributed densely around a specific size without distribution in a broad range could be obtained stably by the process described above.

### Example 6

Using a wedge wire screen (trade name) manufactured by Manabe Kogyo Co., Ltd., fermented milk curds (that is, a milk base (yogurt mix) with a solids content, 24.2%; protein concentration, 7.1%; fat, 4.7%; sugar 5.0%; a stabilizer, not added) obtained in the same manner as in Example 1 were broken by fluidizing and extruding the fermented milk curds through openings of the filter and then rapidly cooled to about 5°C with a heat exchanger such as a tubular cooler in the same manner as in Example 1. Thereafter, the sample was placed in a predetermined frame and cooled in a refrigerator (3 to 5°C, 12 hours), to give stirred yogurt as the fermented milk of the present invention.

A plurality of minute openings in slits having a slit width of 20 µm formed in a filter member are formed in the wedge wire screen (trade name, manufactured by Manabe Kogyo Co., Ltd.) used in Example 6. This slit width corresponds to 650 meshes (JIS screen standards). That is, the step of breaking the fermented milk curds was carried out by using a filter member having a plurality of openings having a size of 650 meshes (JIS screen standards) formed therein.

The throughput speed (speed of fluidizing the fermented milk curds) was a flow rate of 160 L/h fermented milk curds.

The temperature of the fluidized fermented milk curds was changed with time to become 43 to 35°C.

The relationship between the distributed state of the diameters of fermented milk particles produced and the flow rate of the fermented milk curds fed is shown in Fig. 6. As shown in Fig. 6, the particle diameters were distributed around a size of about 10 µm.

The average particle diameter was 10.3 µm, and the viscosity was 8300 mPa·s.

Fermented milk having suitable viscosity with particles being distributed densely around a specific size without distribution in a broad range could be obtained stably by the process described above.

### Example 7

Three triangle filters (trade name, manufactured by Arai Machinery Corporation) having a plurality of thin openings in slits having slit widths of 15 µm, 20 µm and 25 µm formed in filter members were used. Fermented milk curds (solids content of milk base (yogurt mix), 24.2%; protein concentration, 7.1%; fat, 4.7%; sugar 5.0%; a stabilizer, not added) prepared so as to have the same composition as in Example 1 were fluidized and extruded through a plurality of slits having slit widths of 15 µm, 20 µm and 25 µm to break the fermented milk curds. Thereafter, the fermented milk curds were rapidly cooled to about 5°C with a heat exchanger. Thereafter, the sample was placed in a predetermined frame and cooled in a refrigerator (3 to 5°C, 12 hours), to give 3 kinds of stirred yogurts as the fermented milk of the present invention.

In Example 7, the sizes of openings (slits having slit widths of 15 µm, 20 µm and 25 µm) of the triangle filters (trade name) having a plurality of thin openings in slits having slit widths of 15 µm, 20 µm and 25 µm correspond to 900 meshes, 650 meshes and 550 meshes (JIS screen standards). That is, the step of breaking the fermented milk curds obtained in the same manner as in Example 1 was carried out by using the 3 triangle filters (trade name, manufactured by Arai Machinery Corporation) having a plurality of openings having sizes of 15 µm (900 meshes), 20 µm (650 meshes) and 25 µm (550 meshes), respectively.

In any case, the throughput speed (speed of fluidizing the fermented milk curds) was a flow rate of 5000 L/h fermented milk curds through an effective area of 1200 cm² of the triangle filter (trade name). The flow rate of 5000 L/h is the throughput capacity of production level in an actual factory.

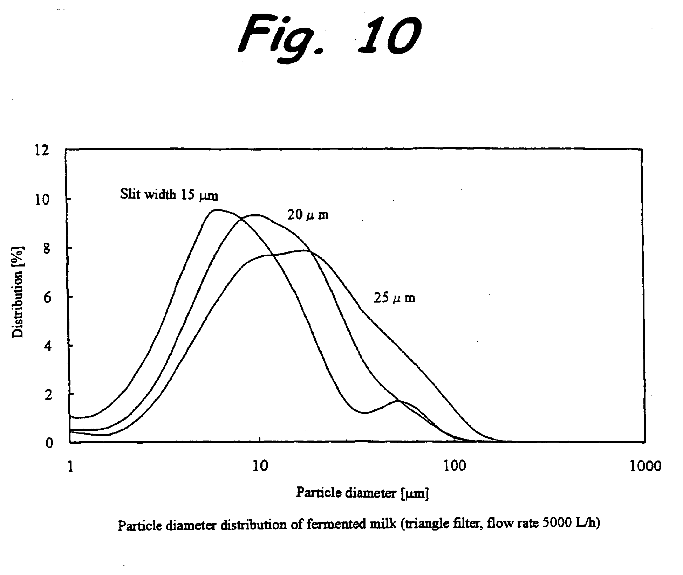

The relationship between the distributed state of the diameters of fermented milk particles produced and the flow rate of the fermented milk curds fed is shown in Fig. 10. As shown in Fig. 10, when the slit width was 15 µm, the particle diameters were distributed around a size of about 9 µm. When the slit width was 20 µm, the particle diameters were distributed around a size of about 10 µm, and when the slit width was 25 µm, the particle diameters were distributed around a size of about 12 µm.

When the slit width was 15 µm, the average particle diameter was 6.4 µm; when the slit width was 20 µm, the average particle diameter was 9.5 µm; and when the slit width was 25 µm, the average particle diameter was 13.2 µm.

When the slit width was 15 µm, the viscosity was 17700 mPa·s; when the slit width was 20 µm, the viscosity was 18100 mPa·s; and when the slit width was 25 µm, the viscosity was 17700 mPa·s.

Fermented milk having suitable viscosity with particles being distributed densely around a specific size without distribution in a broad range could be obtained stably by the process described above.

### Comparative Example 1

Fermented milk was produced in the same manner as in Examples 1 to 4 except that in the step of breaking the fermented milk curds, the treatment was carried out by using a mesh filter (grating) in place of the four triangle filters (trade name, manufactured by Arai Machinery Corporation) having a plurality of slits having slit widths of 10, 15, 20 and 25 µm formed in filter members.

The mesh filter is also called a grating and has a structure for pulverizing a treated fluid by passing it through latticed gaps arranged at equal intervals.

The mesh diameter was 250 µm (corresponding to 60 meshes in JIS screen standards). The throughput speed was a flow rate of 500 L/h fermented milk curds through an effective area of 480 cm² of the mesh filter.

The temperature of the treated fluid was changed with time to become 43 to 35°C.

The distributed state of the diameters of fermented milk particle diameters is shown in Fig. 7. As shown in Fig. 7, the particle diameter was dispersed broadly around a size of about 170 µm.

The average particle diameter of the fermented milk was 115 µm, and the viscosity was 8200 mPa·s.

The resulting fermented milk had strong gritty texture and powdery texture as compared with those in Examples 1 to 4.

### Comparative Example 2

Fermented milk was produced in the same manner as in Examples 1 to 4 except that in the step of breaking the fermented milk curds, the treatment was carried out by using an in-line mixer (trade name: "Line Mill", manufactured by TOKUSHUKIKA. co. jp) in place of the four triangle filters (trade name, manufactured by Arai Machinery Corporation) having a plurality of slits having slit widths of 10, 15, 20 and 30 µm formed in filter members.

The in-line mixer is a machine for pulverizing particles by giving shear stress continuously to the particles by rotating a rotating blade in a casing of the machine.

The throughput speed consisted of two standards, that is, flow rates of 200 L/h and 600 L/h treated fluid.

The temperature of the treated fluid was changed with time to become 43 to 35°C.

The relationship between the distributed state of the diameters of fermented milk particles produced and the flow rate of the fermented milk curds fed is shown in Fig. 8. As shown in Fig. 8, the particle diameter was dispersed broadly in any flow rates.

When the flow rate of the curds fed was 200 L/h, the average particle diameter was 15.0 µm and when the flow rate was 600 L/h, the average particle diameter was 30.4 µm, and when the flow rate was 200 L/h, the viscosity was 6000 mPa·s, and when the flow rate was 600 L/h, the viscosity was 6400 mPa·s.

Because of uneven particle diameters, there was gritty texture or powdery texture. The fermented milk had lower viscosity with low thick texture than in Examples 1 to 4.

### Comparative Example 3

Fermented milk was produced in the same manner as in Examples 1 to 4 except that in the step of breaking the fermented milk curds, the treatment was carried out by using a homogenizer in place of the four triangle filters (trade name, manufactured by Arai Machinery Corporation) having a plurality of slits having slit widths of 10, 15, 20 and 30 µm formed in filter members.

The homogenizer has a structure for pulverizing a treated fluid by passing it through a flow path and jetting it at high pressure.

The homogenizing pressure was three standards of 5 MPa, 10 MPa and 15 MPa.

In any cases, the throughput speed was 800 L/h. The temperature of the treated fluid was changed with time to become 43 to 35°C.

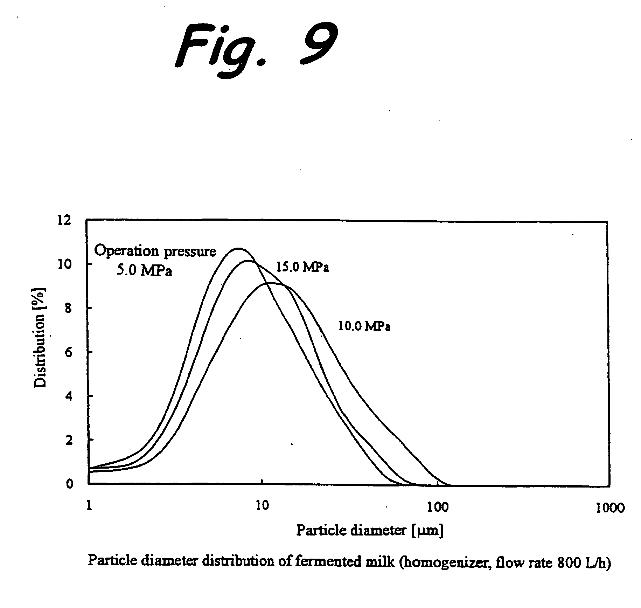

The relationship between the distributed state of the diameters of fermented milk particles produced and the pressure for feeding the fermented milk curds is shown in Fig. 9. As shown in Fig. 9, when the homogenization pressure was 5 MPa, the particle diameters were distributed around a size of about 7 µm. When the homogenization pressure was 10 MPa, the particle diameters were distributed around a size of about 12 µm. When the homogenization pressure was 15 MPa, the particle diameters were distributed around a size of about 9 µm.

In any cases, the average particle diameter was 7.0 to 7.2 µm, and the viscosity was 4300 to 5600 mPa·s.

As described above, the particle diameters were concentrated around a specific size and not dispersed broadly, but the viscosity was low, and the thick texture was extremely low.

Because the shear force was determined by regulation of the pressure, fine control of the particle diameter and stable operation were difficult.

### [Quality Evaluation Test (Sensory Evaluation)]

A quality evaluation test (sensory evaluation) on the respective products in Examples 1 to 7 and Comparative Examples 1 to 3 was conducted. The test results are shown in Table 1.

**Table 1. Sensory evaluation of fermented milk**

| | Smoothness | Thick texture | Clear-cut texture | Comprehensive evaluation |
|---|---|---|---|---|
| Example 1 | A | A | A | A |
| Example 2 | A | A | A | A |
| Example 3 | A | A | A | A |
| Example 4 | A | A | A | A |
| Example 5 | A | A | A | A |
| Example 6 | A | A | A | A |
| Example 7 (slit width 15 µm) | A | A | A | A |
| Example 7 (slit width 20 µm) | A | A | A | A |
| Example 7 (slit width 25 µm) | A | A | A | A |
| Comparative Example 1 | D | A | C | C |
| Comparative Example 2 | C | B | B | B |
| Comparative Example 3 | A | D | A | B |

| | | | | |
|---|---|---|---|---|
| Smoothness: absence of gritty texture and powdery texture Thick texture: rich texture and dense texture upon eating Clear-cut texture: absence of sticky texture upon eating and powdery texture | | | | |

| | |
|---|---|
| Example 1 : 250 L/h | Example 3 : 2900 L/h |
| Example 2 : 550 L/h | Example 4 : 3500 L/h |

### Comparative Example 2 : homogenization pressure 10 MPa

4-Rank evaluation by a panel of 10 specialists: A (most superior) to D (most inferior). Comprehensive evaluation is the mean in each item. A, point 4; B, point 3; C, point 2; and D, point 1, and the mean was rounded off.

As shown in these results, the fermented milks of the present invention produced by the process of the present invention (Examples 1 to 7) were products having rich texture, excellent texture upon eating and excellent flavor, and their comprehensive evaluation was high. On the other hand, the fermented milks obtained by the processes in the other comparative examples were evaluated to be inferior in some items and thus badly-balanced as a whole, resulting in low comprehensive evaluation.

## Claims

1. A process for producing fermented milk comprising a step of breaking fermented milk curds obtained by fermenting a milk base (yogurt mix) containing at least one member selected from milk, dairy product and milk protein, wherein the step of breaking the fermented milk curds involves extruding the fermented milk curds through a plurality of openings having a size of 44 to 10 µm (325 to 1300 meshes (JIS screen standards)),

2. The process for producing fermented milk according to claim 1, wherein a plurality of the openings having a size of 44 to 10 µm (325 to 1300 meshes (JIS screen standards)) are formed into a plurality of slits having a slit width of 10 to 40 µm formed in a filter member.

3. The process for producing fermented milk according to claim 2, wherein the size of the particle diameter of the produced fermented milk is controllable by changing the width of a slit formed in a filter membrane and/or the flow rate of the fermented milk curds passing through the filter member.

## Patentansprüche

1. Verfahren zur Herstellung fermentierter Milch, das einen Schritt des Brechens der fermentierten Sauermilch enthält, die durch Fermentierung einer Milchbasis erhalten wird, die mindestens ein unter Milch, Milchprodukt und Milchprotein gewähltes Mitglied enthält, wobei der Schritt des Brechens der fermentierten Sauermilch die Extrusion der fermentierten Sauermilch durch eine Vielzahl von Öffnungen mit einer Größe von 44 bis 10 µm (325 bis 1300 mesh (JIP Siebstandard - "JIS screen standards" )) einbegreift.

2. Verfahren zur Herstellung fermentierter Milch gemäß Anspruch 1, durch eine Vielzahl von Öffnungen mit einer Größe von 44 bis 10 µm (325 bis 1300 mesh (JIP Siebstandard - "JIS screen standards" )) in Form einer Vielzahl von Schlitzen mit einer Schlitzbreite von 10 bis 40 µm, die in einem Membranfilter gebildet werden.

3. Verfahren zur Herstellung fermentierter Milch gemäß Anspruch 2, wobei die Durchmessergröße der Partikel der hergestellten Sauermilch durch Veränderung der in der Filtermembran gebildeten Schlitzbreite und/oder des Durchsatzes der fermentierten Sauermilch durch den Membranfilter kontrolliert werden kann.

## Revendications

1. Un procédé pour la production de lait fermenté, comprenant une étape de broyage de lait caillé fermenté obtenu en fermentant une base de lait contenant au moins un membre choisi parmi le lait, un produit laitier et une protéine du lait, dans lequel l'étape de broyage de lait caillé fermenté implique une extrusion du lait caillé en utilisant un mélange de yaourt à base de lait à travers une pluralité d'ouverture ayant une taille de pore de 44 à 10 µm (325 à 1300 (tamis standards JIS (« JIS screen standards »))).

2. Le procédé selon la revendication 1, dans lequel une pluralité d'ouvertures ayant une taille de pores de 44 à 10 µm (325 à 1300 mesh (tamis standards JIS (« JIS screen standards »))) est formée d'une pluralité de fentes ayant une largeur de fente de 10 à 40 µm formées dans un filtre membrane.

3. Le procédé selon la revendication 2, dans lequel la taille du diamètre des particules du lait fermenté produit est contrôlable en changeant la taille de la largeur d'une fente formée dans filtre membrane et/ou le débit du lait caillé fermenté passant à travers le filtre membrane.
